# EUROPEAN PATENT SPECIFICATION

(11) **EP 2 842 677 B1**
(45) Date of publication and mention of the grant of the patent: **13.07.2016**
(21) Application number: 14182286.6
(22) Date of filing: 26.08.2014
(51) Int. Cl.: B23G 7/02, B21H 3/04, B23K 26/34, B23K 37/053, B23K 101/06, B23K 103/04

(54) **Method for making tools for machines adapted for forming threads on cylindrical bodies by means of plastic deformation**
Verfahren zur Herstellung von Werkzeugen für Maschinen zur Herstellung von Gewinden in zylindrischen Körpern mittels plastischer Verformung
Procédé de fabrication d'outils pour des machines conçues pour former des filetages sur des corps cylindriques par déformation plastique

(30) Priority: 28.08.2013 IT PD20130237
(43) Date of publication of application: 04.03.2015
(73) Proprietor: Mico S.r.l., 20122 Milano (IT)
(72) Inventor: Farina, Pietro, I-37069 Villafranca (VR) (IT)
(74) Representative: Gallo, Luca

(56) References cited:
- EP-A1- 2 327 490
- EP-A1- 2 335 834
- EP-A2- 1 629 934
- WO-A1-97/29879
- DE-A1-102006 030 661
- JP-A- S62 224 527
- US-A- 5 855 149
- US-B2- 7 139 633
- DATABASE WPI Week 200604 Thomson Scientific, London, GB; AN 2006-030170 XP002723464, -& CN 1 651 606 A (XU Z) 10 August 2005 (2005-08-10)

## Description

### Field of application

The present invention regards a method for making tools for machines adapted for forming threads on cylindrical bodies by means of plastic deformation according to the preamble of the independent claim 1.

The present method is advantageously employed in the industrial field of processing metals via plastic deformation and, more precisely, for making a tool adapted for forming, by means of rolling, of threads of cylindrical bodies such as shafts, rods etc.

### State of the art

Currently, in the field of production of metal articles, it is known to use automatic rolling machines, described for example in the patent JP 2010082634, comprising two or more powered tool holder mandrels on which corresponding tools can be mounted that have cylindrical roller form, each provided with ribs in relief. Such tools are driven to rotate parallel to each other in compression against a cylindrical body to be formed, such as a shaft that advances through them, in order to make, on its peripheral external surface, the thread with the desired form by means of plastic deformation.

As is known, forming by means of cold plastic deformation allows obtaining particularly strong mechanically threaded bodies, since the metal fibers of the body subjected to processing are not cut as in a normal milling process.

The considerable pressure to which the bodies to be formed are subjected and consequently the considerable reaction stresses to which the roller tools are stressed for imparting the threads involve a quick wear of the same tools, which must therefore be frequently replaced with other new tools.

Currently, as is known, the tools for machines adapted to form threads on cylindrical bodies via plastic deformation are made starting from solid metal bodies, which are subjected to tempering and milling actions in order to make the central hole for mounting the tool on the axis of the tool holder mandrel, and then to make the spiral rib in relief intended to produce the deformations on the body to be formed with thread form. Such method for producing the tool has in practice been found to not lack drawbacks.

A first drawback of the known methods for making tools for machines adapted for forming threads lies in the fact that the rib in relief of the tools is not provided with high mechanical strength characteristics, given that it is obtained via milling by cutting the continuity of the metal fibers, i.e. usually steel, with which the body of the tool is made. Consequently, the tools are subjected to quick wear, with the need to replace them with other, new tools with clear high production costs.

A second drawback of the known methods comes from the fact that hollow cylindrical bodies are not available on the market which have material, shape and thickness required by the rolling machines, from which the tool production can start, and it is therefore necessary to start from solid metal bodies with consequent increased production costs.

During the rolling process, the thread receives forging properties that contribute to considerably increasing the fatigue strength of the material and the static load at the base of the thread. The mechanical strength of the thread made via deformation with a rolling machine is on the order of 30% greater than that obtainable with a normal cutting process.

A technique is also known for coating surfaces of products generally made of metal, usually known with the English term "laser cladding" and for example described in the patent US 7139633, which provides for the use of a high-power diode laser which conveys a beam though a fiber optic conductor to an emission head on which an optical group is mounted with lenses and/or mirrors for focusing the beam itself on the surface to be coated. The emission head, of the type for example described in the patents US 5321228 and EP 741626, is associated with a supply with metal powders which intercept the beam at the surface, coming to be fixed thereon and defining a continuous coating layer. The supply with the powder can occur with a mixture of powders with different characteristics, including for example at least one susceptible to melting by intercepting the laser beam and at least one susceptible of conferring to the coating particular mechanical or chemical characteristics such as mechanical wear resistance, fatigue strength, corrosion resistance, etc.

Also usually advantageously provided is a supply of an inert gas, such as argon or nitrogen, at the emission nozzle of the head in order to prevent the oxidation of the powders during their rapid solidification, which would produce undesired waste. The supply of the powders and the gas can occur by means of separate pipes or by means of a common pipe, and in the latter case the inert gas will act as a carrier for transporting the powders.

The coating by means of the laser cladding technique determines the formation of a surface layer with different composition than the base material on which the coating is made, different from other treatments such as tempering which involves only one modification of the surface layer properties.

The heat supply of this technique is quite limited so that there is practically no distortion of the piece to be coated.

The limitation of this technology, which prevents the diffusion thereof, is the high cost and the low productivity after considerable investment.

Also known from the closest prior art EP 2327490 is a method for making tools for machines adapted for forming threads on cylindrical bodies by means of plastic deformation, which provides for arranging a hollow tubular support body made of metal material, applying a hard coating by means of brazing on the cylindrical surface and then forming the thread via grinding or applying a hard coating by means of brazing on the thread that is already formed.

### Presentation of the invention

In this situation, the problem underlying the present invention is therefore that of overcoming the drawbacks manifested by the abovementioned solutions of known type by providing a method for making tools for machines adapted for forming threads on cylindrical bodies by means of plastic deformation, which allows obtaining tools with high mechanical characteristics and in particular susceptible to limited wear and hence long lifetime in forming threads.

A further object of the present invention is to provide a method for making tools for machines adapted for forming threads on cylindrical bodies by means of plastic deformation, which is inexpensive to make, allow the use of starting pieces that are easily available on the market.

A further object of the present invention is to provide a method for making tools for machines adapted for forming threads on cylindrical bodies by means of plastic deformation, which is simple and safe.

These objects are achieved by the features of claim 1. Preferred embodiments are presented in the dependent claims of the application.

### Brief description of the drawings

The technical characteristics of the present invention, according to the aforesaid objects, can be found in the contents of the below-reported claims and the advantages thereof will be clearer in the following detailed description, made with reference to the enclosed drawings which represent several merely exemplifying and non-limiting embodiments of the invention, in which:

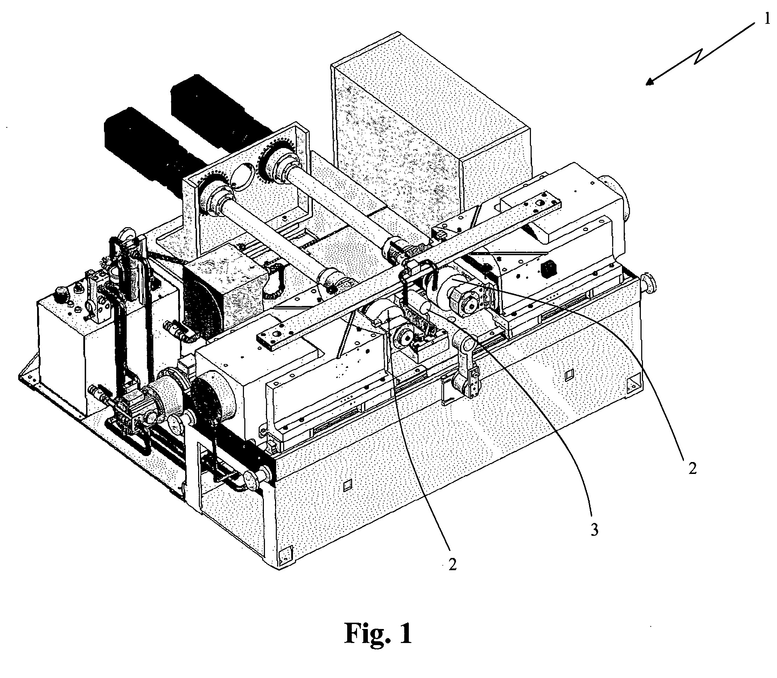

- figure 1 shows a rolling machine for forming threads on cylindrical bodies by means of plastic deformation, carrying a tool mounted thereon that is made with the method, subject of the present invention;

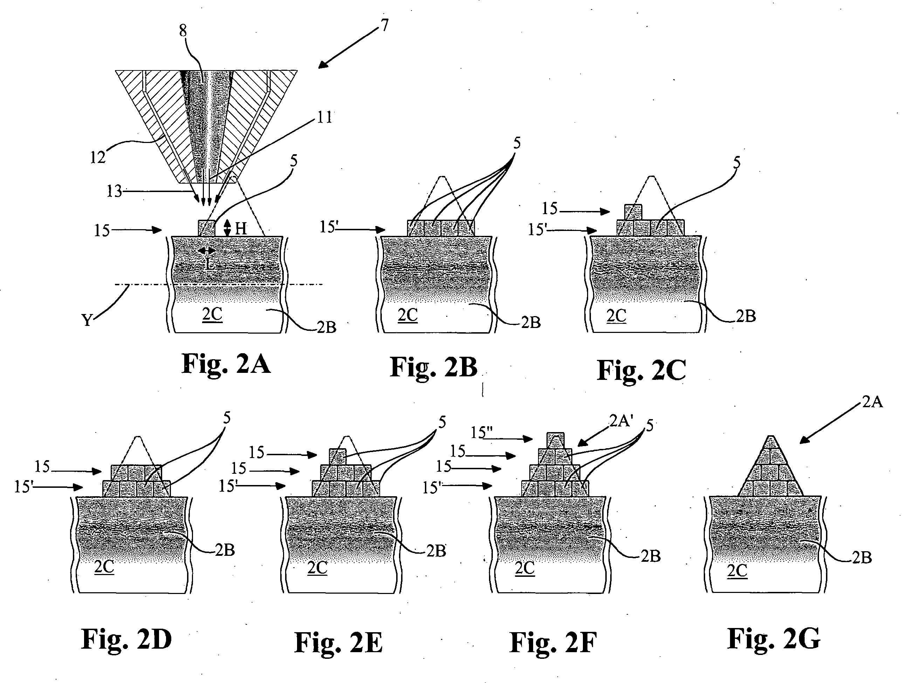

- figs. 2A - 2G illustrate a sequence of steps of the method, subject of the present invention, for forming a tool for machines adapted for forming threads on cylindrical bodies by means of plastic deformation;

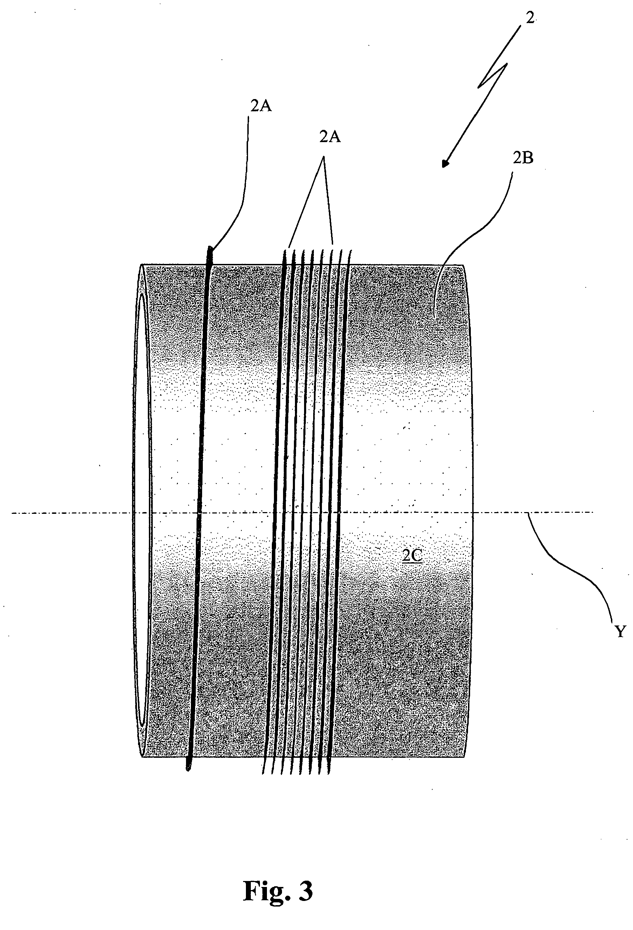

- figure 3 shows a tool for rolling machines adapted for forming threads on cylindrical bodies by means of plastic deformation, made with the method, subject of the present invention;

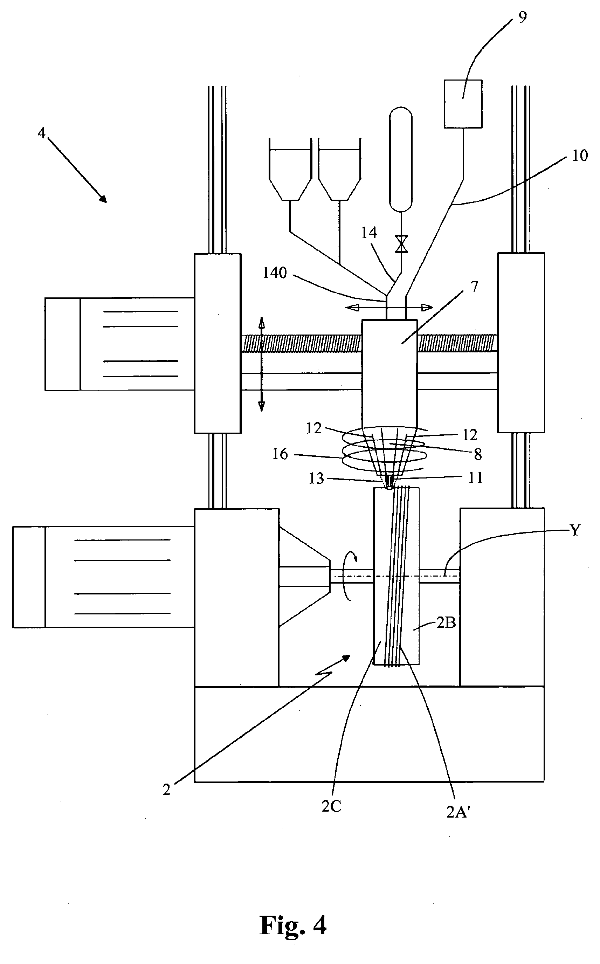

- figure 4 shows an apparatus for depositing coating beads by means of a laser beam and a flow of powders intercepting the laser beam.

### Detailed description of several preferred embodiments

With reference to the enclosed figures, a rolling machine for forming threads on cylindrical bodies by means of plastic deformation is indicated with 1 in its entirety. The aforesaid machine 1 for such purpose carries a tool mounted that is made according to the method, subject of the present invention, and is in turn indicated overall with the reference number 2.

The method, subject of the present invention, is adapted to make tools 2 provided with a spiral rib 2A with thread form on a tubular support body 2B. Such tools are, as stated, intended to be employed on rolling machines 1 for forming threads on cylindrical bodies of mechanical components 3 employed for many different applications. The aforesaid thread is thus obtained, in a *per se* conventional manner, via plastic deformation of the cylindrical body starting from its peripheral surface.

The threads that are obtained on the cylindrical bodies being processed, e.g. for the production of shafts, rods, collars etc. for the various applications of the mechanical members that incorporate such cylindrical bodies, thus result counter-shaped with respect to the spiral rib 2A of the tool 2.

The method for making tools 2 according to the present invention initially provides for a step of arranging a hollow tubular support body 2B made of metal material, e.g. with high hardness such as steel D2, having a longitudinal extension Y. Such body is positioned at an apparatus 4 for the laser forming of a coating bead 5 of width L and thickness H starting from metal powders.

The hollow tubular support body 2B is more precisely arranged with its cylindrical peripheral surface 2C in a position facing a work head 7 of the apparatus 4. More in detail, such work head 7 is provided with at least one laser beam emitter 8 supplied by a laser source 9, e.g. with power diodes, through a fiber optic cable 10. The emitter 8 focuses - by means of optical devices with lenses and/or mirrors, of the type *per se* known to the man skilled in the art, and employed in the apparatuses for surface coating termed laser cladding - the laser beam 11 on the peripheral surface 2C of the tubular support body 2B of the tool 2 on which it is desired to obtain the spiral rib 2A.

The same work head 7 is also provided with a nozzle 12 for emitting a flow of metal powders 13, which intercepts the laser beam 11 substantially at the peripheral surface 2C of the tubular support body 2B of the tool 2.

Advantageously, the head 7 is also associated with a supply of inert gas 14, such as argon or nitrogen, which is emitted at the peripheral surface 2C of the tubular support body 2B of the tool 2 in order to prevent the oxidation of the powders during their rapid solidification on the same peripheral surface 2C, which would produce undesired waste. The supply of the head 7 with the metal powders 13 and with the inert gas 14 can occur by means of separate pipes or by means of a common pipe 140, as in the embodiment of the enclosed figures. In the latter case, the inert gas 14 will also act as a carrier for transporting the metal powders 13.

Otherwise, the latter can also be transported separately, also with mechanical systems such as by means of a flexible screw inserted in a supply pipe.

With the term metal powders it must be intended powders of only one metal component (whether this is an element or an alloy) susceptible to melting by intercepting the laser beam, or powders of mixtures comprising at least one metal component susceptible of melting, as well as other powder components whether they are metal and capable of melting or not, or even non-metal, such as ceramic materials.

Advantageously the mixture of powders can contain powders that are meltable by the laser beam together with non-meltable powders, preferably with high mechanical properties and susceptible to employing the meltable powders to form a bead 5 fixed on the surface 2C of the tubular support body 2B of the tool 2.

Among the employable powders, the following can be comprised: steel alloy powders, tungsten powders, titanium oxide powders, etc.

The method provides that, by means of a logic control unit, the controlled advancing of the work head 7 is carried out along the longitudinal extension Y of the tubular support body 2B of the tool 2 for a plurality of longitudinal strokes, advantageously outgoing and return.

According to the method, subject of the invention, the same logic control unit also controls the rotation of the tubular support body 2B with respect to the work head 7 for a plurality of rotations.

There is then the controlled deposit by means of such logic control unit of at least one coating bead 5 on the peripheral surface 2C of the tubular support body 2B of the tool 2. Hereinbelow, it will be better specified that the control of the deposition is carried out in order to form, by means of adjacent beads 5, the thread 2C of the desired form. Furthermore, the control of the deposition allows advantageously and also preferably to define the quantity of powder to be released on the surface, as well as the power of the laser beam.

According to the idea underlying the present invention, the method provides for the forming of a thread with excess material 2A' with respect to the profile of the thread to be made, by means of the aforesaid controlled deposit of a plurality of adjacent beads 5 during the combination of the aforesaid controlled advancing of the work head 7 for the aforesaid plurality of longitudinal strokes and the controlled rotation of the tubular support body 2B for the aforesaid plurality of rotations.

Subsequently, there is then a step for grinding the tool 2, during which the quantity of material that is outside the programmed profile of the thread 2A is removed from the thread with excess material 2A'. By means of the grinding, the excess or overabundant material is advantageously removed with a circular cutter, such material being excessive or overabundant with respect to the profile of the thread 2A that one intends to make. Preferably the width of each bead 5 is comprised in the interval between 2 and 10 mm while its height is comprised between 1 and 5 mm.

The shape of the excess thread 2A' approximates - by excess - the desired profile of the thread 2A and preferably has a tapered form obtained by means of the superimposition of multiple layers 15 of adjacent beads 5, of which at least one is a widened base layer 15', fixed to the peripheral surface 2C of the tubular support body 2B, and at least one is a final layer 15", narrower than the base layer 15' and radially more external with respect thereto, and susceptible to frontally deform a cylindrical body to be formed in the rolling machine 1.

Each layer of the excess thread 2A', obtained by means of the forming step, is composed of multiple side-by-side beads.

Preferably, the method provides for a step for heating the tubular support body 2B in order to facilitate the melting of its surface layer 2C with the laser beam without assigning the latter the function of supplying on its own the entire heat quantity necessary for such purpose. Such heating step is for example obtained by means of an inducer 16, preferably mounted coaxially with the emitter 8 of the laser beam.

The controlled deposit is preferably obtained by controlling, by means of the logic control unit, the supply of the powder flow with different powders or mixtures of powders upon varying the layer 15 which comes to form the excess thread 2A'. Advantageously, the forming step can for example provide for the formation of multiple layers 15 of beads 5, with the final layer 15" formed by powders made of material with lower friction than the material of the powders that forms at least one underlying layer 15 in order to limit the wear of the tool 2 during its use in the rolling machine 1.

For the same reasons, the same final layer 15" can also be composed with powders made of material with greater hardness than the material of the powders of at least one underlying layer.

The method according to the invention as described above attains numerous advantages. A first advantage lies in the possibility to make tools 2 capable of having a lifetime much greater than that provided today for normal tempered tools employed in rolling machines.

A second advantage lies in the possibility to make the thread 2A of the tool 2 with layers of different materials that account for the specific requirements of the products that they will come to form via plastic deformation in the rolling machines.

A third advantage lies in the possibility to automate the entire tool 2 manufacturing sequence.

## Claims

1. Method for making tools for machines adapted for forming threads on cylindrical bodies by means of plastic deformation, which is **characterized in that** it comprises the following operating steps:
- arranging a hollow tubular support body (2B) made of metal material with longitudinal extension (Y) at an apparatus (4) for the laser forming of a coating bead (5) starting from metal powders and with its peripheral cylindrical surface (2C) in a position facing a work head (7) of said apparatus (4) provided with at least one laser beam emitter (8) and at least one nozzle (12) for emitting a flow of metal powders (13) to intercept said laser beam (11);
- controlled advancing of said work head (7) along the longitudinal extension (Y) of said tubular support body (2B) by means of a logic control unit for a plurality of longitudinal strokes;
- controlled rotation by means of said logic controller unit of said tubular support body (2B) with respect to said work head (7) for a plurality of rotations;
- controlled deposit by means of said logic controller unit of said coating bead (5) on the peripheral surface (2C) of said tubular support body (2B);
- forming a thread with excess material (2A') with respect to the profile of the thread (2A) to be made by means of said controlled deposit of a plurality of adjacent coating beads (5) during the combination of said controlled advancement of said work head (4) for the aforesaid plurality of longitudinal strokes and said controlled rotation of said tubular support body (2B) for the aforesaid plurality of rotations;
- grinding said thread with excess material (2A') obtained in said forming step by means of removal of the material outside the programmed profile of said thread (2A).

2. Method for making tools as claimed in claim 1, **characterized in that** said thread with excess material (2A') obtained by means of said forming step is made in tapered form by means of the superimposition of multiple layers (15) of coating beads (5) of which at least one widened base layer (15') is fixed to the peripheral surface (2C) of said tubular support body (2B) and at least one radially narrower final layer (15") is more external than the base layer (15') and susceptible to frontally deform a cylindrical body to be formed in a rolling machine (1).

3. Method for making tools as claimed in claim 1 or 2, **characterized in that** each layer (15) of said thread with excess material (2A') obtained by means of said forming step is composed of multiple adjacent coating beads (5).

4. Method for making tools as claimed in any of the previous claims **characterized in that** it comprises a step for heating said tubular support body (2B), in particular by means of an inducer (16) preferably mounted coaxially with said laser beam emitter (8) suitable to contribute to the melting of the peripheral surface (2C) of said tubular support body (2B) performed with said laser beam (11).

5. Method for making tools as claimed in claim 2, **characterized in that** said controlled deposit is obtained by controlling, by means of said logic control unit, the supply of said metal powder flow (13) with different powders or mixtures of powders upon varying the layer (15) of said thread with excess material (2A').

6. Method for making tools as claimed in claim 2, **characterized in that** said step for forming multiple layers (15) of coating beads (5) provides for a final layer (15") with powders (13) made of material with friction lower than the material of the powders (13) of at least one other layer (15).

7. Method for making tools as claimed in claim 2, **characterized in that** said step for forming multiple layers (15) of coating beads (5) provides for a final layer (15") with powders made of material with greater hardness than the material of the powders (13) of at least one other layer.

## Patentansprüche

1. Verfahren zur Herstellung von Werkzeugen für Maschinen zur Herstellung von Gewinden in zylindrischen Körpern mittels plastischer Verformung, **dadurch gekennzeichnet**, die folgenden Arbeitsschritte zu umfassen:
- Vorbereitung eines rohrförmigen hohlen Stützkörpers (2B) aus metallischem Werkstoff mit Längsverlauf (Y) auf einem Gerät (4) zur Herstellung eines Beschichtungswulsts (5) durch Laserbearbeitung, ausgehend von Metallpulvern, dessen zylindrische Außenfläche (2C) einem Bearbeitungskopf (7) des genannten Geräts (4) gegenüberliegt, das mit mindestens einem Laserstrahler (8) und mindestens einer Düse (12) zur Ausgabe eines Metallpulverflusses (13) ausgestattet ist, der von dem genannten Laserstrahl (11) erfasst wird;
- kontrollierter Vorschub des genannten Bearbeitungskopfs (7) entlang der Längsachse (Y) des genannten rohrförmigen Stützkörpers (2B) über eine logische Steuerung auf einer Vielzahl von Längsbahnen;
- kontrollierte Drehung anhand der genannten logischen Steuerung des genannten rohrförmigen Stützkörpers (2B) im Verhältnis zu dem genannten Bearbeitungskopf (7) durch eine Vielzahl von Drehungen;
- kontrollierte Auftragung anhand der genannten logischen Steuerung des genannten Beschichtungswulsts (5) auf die Außenfläche (2C) des genannten rohrförmigen Stützkörpers (2B);
- Herstellung eines Gewindes aus überschüssigem Werkstoff (2A') im Verhältnis zum herzustellenden Gewindeprofil (2A) durch das genannte kontrollierte Auftragen einer Vielzahl von aneinander angrenzenden Beschichtungswülsten (5) während der Kombination des genannten kontrollierten Vorschubs des genannten Bearbeitungskopfes (4) entlang der oben genannten Vielzahl von Längsbahnen mit der genannten kontrollierten Drehung des genannten rohrförmigen Stützkörpers (2B) durch die oben genannten Vielzahl von Drehungen;
- Schleifen des genannten, bei dem genannten Herstellungsschritt erzielten Gewindes aus überschüssigem Werkstoff (2A') durch Abtragen des Werkstoffs außerhalb des programmierten Profils des genannten Gewindes (2A).

2. Verfahren zur Herstellung von Werkzeugen nach Anspruch 1, **dadurch gekennzeichnet, dass** das genannte, mit dem genannten Herstellungsschritt erzielte Gewinde aus überschüssigem Werkstoff (2A') durch die Überlagerung mehrerer Schichten (15) von Beschichtungswülsten, davon mindestens eine verbreiterte und an der Außenfläche des genannten rohrförmigen Stützkörpers (2B) befestigte Grundschicht (15') und mindestens eine schmalere und weiter außen als die Grundschicht (15') liegende Endschicht (15"), mit verjüngter Form ausgeführt wird und geeignet ist, einen zylindrischen Körper frontal zu verformen, der in einer Walzmaschine (1) herzustellen ist.

3. Verfahren zur Herstellung von Werkzeugen nach Anspruch 1 oder 2, **dadurch gekennzeichnet, dass** jede Schicht (15) des genannten, aus dem genannten Herstellungsschritt hervorgegangene Gewinde aus überschüssigem Werkstoff aus mehreren nebeneinander liegenden Beschichtungswülsten (5) besteht.

4. Verfahren zur Herstellung von Werkzeugen nach einem beliebigen der vorangegangenen Ansprüche, **dadurch gekennzeichnet, dass** es einen Schritt der Erwärmung des genannten rohrförmigen Stützkörpers (2B) umfasst, insbesondere durch ein induktives und vorzugsweise koaxial zu dem genannten Laserstrahler montiertes Bauelement (16), das geeignet ist, zum Schmelzen der genannten Außenfläche (2C) des genannten rohrförmigen Stützkörpers (2B) durch den genannten Laserstrahl (11) beizutragen.

5. Verfahren zur Herstellung von Werkzeugen nach Anspruch 2, **dadurch gekennzeichnet, dass** die genannte kontrollierte Auftragung durch Steuern der Zufuhr des genannten Metallpulverflusses (13) mit unterschiedlichen Pulvern oder Pulvermischung bei Änderung der genannten Schicht (15) des genannten Gewindes aus überschüssigem Werkstoff (2A') über die genannte logische Steuerung erzielt wird.

6. Verfahren zur Herstellung von Werkzeugen nach Anspruch 2, **dadurch gekennzeichnet, dass** der genannte Schritt zur Herstellung mehrerer Schichten (15) von Beschichtungswülsten (5) eine Endschicht (15") mit Pulvern (13) aus Werkstoff mit geringerer Reibung als der Werkstoff der Pulver (13) mindestens einer weiteren Schicht (15) vorsieht.

7. Verfahren zur Herstellung von Werkzeugen nach Anspruch 2, **dadurch gekennzeichnet, dass** der genannte Schritt zur Herstellung mehrerer Schichten (15) von Beschichtungswülsten (5) eine Endschicht (15") mit Pulvern (13) aus Werkstoff mit größerer Härte als der Werkstoff der Pulver (13) mindestens einer weiteren Schicht vorsieht.

## Revendications

1. Procédé de fabrication d'outils pour des machines conçues pour former des filetages sur des corps cylindriques par déformation plastique, lequel est **caractérisé en ce qu'**il comprend les phases opérationnelles suivantes :
- préparation d'un corps de support tubulaire (2B) creux en matière métallique avec développement longitudinal (Y), au niveau d'un appareil (4) pour le moulage au laser d'un cordon de revêtement (5) à partir de poudres métalliques et avec sa propre surface périphérique cylindrique (2C) placée en vis à vis d'une tête de travail (7) dudit appareil (4) dotée d'au moins un émetteur de rayon laser (8) et d'au moins une buse (12) d'émission d'un flux de poudres métalliques (13) pour l'interception dudit rayon laser (11) ;
- avance contrôlée de ladite tête de travail (7) le long du développement longitudinal (Y) dudit corps de support tubulaire (2B) à l'aide d'une unité de contrôle logique pour une pluralité de courses longitudinales ;
- rotation contrôlée au moyen de ladite unité de contrôle logique dudit corps de support tubulaire (2B) par rapport à ladite tête de travail (7) pour une pluralité de rotations ;
- dépose contrôlée au moyen de ladite unité de contrôle logique dudit cordon de revêtement (5) sur la surface périphérique (2C) dudit corps de support tubulaire (2B) ;
- formation d'un filetage en excédent de matériau (2A') par rapport au profil du filetage (2A) à réaliser à l'aide de ladite dépose contrôlée d'une pluralité de cordons de revêtement (5) adjacents pendant la combinaison de ladite avance contrôlée de ladite tête de travail (4) pour la susdite pluralité de courses longitudinales et de ladite rotation contrôlée dudit corps de support tubulaire (2B) pour la susdite pluralité de rotations ;
- rectification dudit filetage en excédent de matériau (2A') obtenue dans ladite phase de moulage par enlèvement du matériau hors du profil programmé dudit filetage (2A).

2. Procédé de fabrication d'outils selon la revendication 1, **caractérisé en ce que** ledit filetage en excédent de matériau (2A') obtenu par ladite phase de moulage est réalisé en forme diminuée par la superposition de plusieurs couches (15) de cordons de revêtement (5) dont au moins une couche de base (15') élargie fixée à la surface périphérique (2C) dudit corps de support tubulaire (2B) et au moins une couche finale (15") plus étroite radialement plus extérieure que celle de base (15') et susceptible de déformer de front un corps cylindrique à mouler dans une rouleuse (1).

3. Procédé de fabrication d'outils selon les revendications 1 ou 2, **caractérisé en ce que** chacune des couches (15) dudit filetage en excédent de matériau (2A') obtenu au moyen de ladite phase de moulage est composée de plusieurs cordons de revêtement (5) placés côte à côté.

4. Procédé de fabrication d'outils selon une quelconque des revendications précédentes, **caractérisé en ce qu'**il comprend une phase de chauffe dudit corps de support tubulaire (2B), en particulier à l'aide d'un inducteur (16) monté de préférence de façon coaxiale audit émetteur de rayon laser (8), apte à contribuer à la fusion de la surface périphérique (2C) dudit corps de support tubulaire (2B) effectuée par ledit rayon laser (11).

5. Procédé de fabrication d'outils selon la revendication 2, **caractérisé en ce que** ladite dépose contrôlée est obtenue en contrôlant au moyen de ladite unité de contrôle logique l'alimentation dudit flux de poudres métalliques (13) avec différentes poudres ou mélanges de poudres avec la variation de la couche (15) dudit filetage en excédent de matériau (2A').

6. Procédé de fabrication d'outils selon la revendication 2, **caractérisé en ce que** ladite phase de moulage de plusieurs couches (15) de cordons de revêtement (5) prévoit une couche finale (15") avec des poudres (13) en matériau à moindre frottement que le matériau des poudres (13) d'au moins une couche (15).

7. Procédé de fabrication d'outils selon la revendication 2, **caractérisé en ce que** ladite phase de moulage de plusieurs couches (15) de cordons de revêtement (5) prévoit une couche finale (15") avec des poudres en matériau à plus grande dureté que le matériau des poudres (13) d'au moins une autre couche.
